# EUROPÄISCHE PATENTSCHRIFT

(11) **EP 0 497 317 B1**
(45) Veröffentlichungstag und Bekanntmachung des Hinweises auf die Patenterteilung: **14.09.1994**
(21) Anmeldenummer: 92101477.5
(22) Anmeldetag: 29.01.1992
(51) Int. Cl.: H02K 29/00, H02K 16/04

(54) **Elektronisch kommutierter Zweiphasen-Elektromotor mit Aussenläufer**
Electronically commutated two-phase electromotor with outer-rotor
Moteur électrique biphasé à rotor extérieur, commuté électroniquement

(30) Priorität: 30.01.1991 YU 159/91
(43) Veröffentlichungstag der Anmeldung: 05.08.1992
(73) Patentinhaber: FINEA, d.o.o., Y-62000 Maribor Slowenien (YU)
(72) Erfinder: Gaser, Mirko, Dipl.-Ing., YU-64228 Zelezniki, Slovenija (YU)
(74) Vertreter: Hanke, Hilmar

(56) Entgegenhaltungen:
- EP-A- 342 606
- DE-B- 1 233 480
- FR-A- 2 392 525
- US-A- 3 783 313
- US-A- 4 754 183

## Beschreibung

Gegenstand der Erfindung ist ein elektronisch kommutierter Zweiphasen - Elektromotor mit Aussenläufer, dessen Konstruktion eine hohe spezifische Motorleistung, einen guten Wirkungsgrad sowohl bei niedrigen als auch sehr hohen Drehzahlen ermöglicht.

Das durch die vorliegende Erfindung erfolgreich gelöste technische Problem ist eine solche Konstruktion und Ausführung eines elektronisch kommutierten Elektromotors, die wesentlich kostengünstiger als die bekannten Ausführungen der elektronisch kommutierten Elektromotoren sein soll und die überall dort verwendet werden kann, wo bisher reihenschlusserregte Kollektormotoren, Gleichstrom - Kollektormotoren mit Dauermagneten bzw. elektronisch kommutierte Dreiphasen - Elektromotoren und asynchrone Motoren mit Frequenzregelung verwendet wurden.

Für Verwendungszwecke, wo eine Drehgeschwindigkeitsregelung bei einer Drehmöglichkeit links - rechts verlangt wird, können folgende bekannte Arten von Elektromotoren, wie reihenschlusserregte Kollektormotoren, Gleichstrom - Kollektormotoren mit Dauermagneten, Asynchronmotoren mit Frequenzregelung sowie elektronisch kommutierte Dreiphasen - Elektromotoren verwendet werden. Ein reihenschlusserregter Kollektormotor kann recht preiswert hergestellt werden. Es ist ebenfalls möglich, kostengünstige Elektronik für die Drehzahlregelung auf der Basis von preiswerten, besonders zu diesen Zweck entwickelten integrierten Schaltungen herzustellen. Diese Elektromotorentype wird massenweise für den Antrieb von Waschmaschinen verwendet. Die Nachteile derartiger Ausführungen bestehen vor allem in kürzerer Lebensdauer, die die Folge von Bürsten- und Lamellenverschleiss ist. Für den Drehrichtungswechsel ist es ausserdem notwendig, dass die Stromrichtung in der Läuferwicklung mechanisch gewechselt wird. Der Hauptnachteil der Gleichstrom - Kollektormotoren mit Dauermagneten ist eine begrenzte Lebensdauer wegen Bürsten- und Lamellenverschleiss, was besonders bei hohen Motordrehzahlen auftritt.

Ein Asynchronmotor mit Frequenzregelung ist an sich robust und hat eine lange Lebensdauer, doch ist sein grösster Nachteil der relativ hohe Preis des Frequenzreglers. Die bekannten Ausführungen der elektronisch kommutierten Dreiphasen - Elektromotoren besitzen ausgezeichnete Kennwerte, auch eine lange Lebensdauer, sind jedoch relativ kostenungünstig, sowohl der Motor, als auch die Kommutationselektronik.

Typisch ist eine Ausführungsvariante, bei der auf der Motorachse ein Ring aus lamelliertem Eisen angeordnet ist, auf dem die Magnetsegmente befestigt sind. Die sind auf den Ring angeklebt und meist noch bandagiert. Eine solche Befestigungsart wird problematisch vor allem bei höheren Drehzahlen. Meist besitzt der Rotor zwei, vier oder acht Pole, wobei für kleinere Motoren und höhere Drehzahlen zwei- oder vierpolige Läufer verwendet werden. Der Läufer umgibt den Ständerkern aus lamellierten Eisen mit Nuten. In diesen Nuten, deren Zahl gleich der Zahl der Läuferpole ist, befindet sich die Dreiphasenwicklung.

Das Wickeln der Wicklungen, deren Einsetzen in den Ständerkern, die Zwischenphasenisolierung, die Bandagierung und Formung ist recht zeitraubend. Das Wickeln kann auch maschinell ausgeführt werden, doch ist eine solche Wickelmaschine teuer und besitzt eine begrenzte Kapazität.

Hinsichtlich der Form der Magnetsegmente und der Wicklungen können diese Motoren eine sinus- oder trapezförmige Form der induzierten Spannung besitzen. Die einfachere Ausführung ist ein Motor mit trapezförmiger Form der induzierten Spannung.

Der Leistungsteil der Kommutationselektronik besteht aus sechs Transistoren (aus drei Halbbrücken). Über Fühler bekommt die elektronische Schaltung Information über die Lage des Läufers und schaltet ein auf Grund dieser die entsprechenden Transistoren (gleichzeitig je zwei), so dass der Strom durch entsprechende Wicklungen fliessen kann, was eine Drehung des Motors zur Folge hat.

Die Erfindung bezieht sich auf einem elektronisch kommutierten Zweiphasen - Elektromotor mit Aussenläufer gemäß Anspruch 1.

Die Erfindung wird genauer erläutert auf Grund der Beschreibung eines Ausführungsbeispiels und der Zeichnungen, von denen zeigen:
- ***Fig. 1***: den erfindungsmässigen elektronisch kommutierten Zweiphasen - Elektromotor in Längsschnitt
- ***Fig. 2***: den erfindungsmässigen elektronisch kommutierten Zweiphasen - Elektromotor im Querschnitt nach der Linie A-A
- ***Fig. 3***: die teilweise Blockschaltung der Kommutierungselektronik des erfindungsmässigen Elektromotors und
- ***Fig. 4***: den Diagramm der induzierten Spannung des erfindungsmässigen Elektromotors und die Spannungsverläufe an den Ausgängen der Hall-Sonden in Hinsicht an die induzierte Spannung bei verschiedenen Aufstellungsorten dieser Sonden

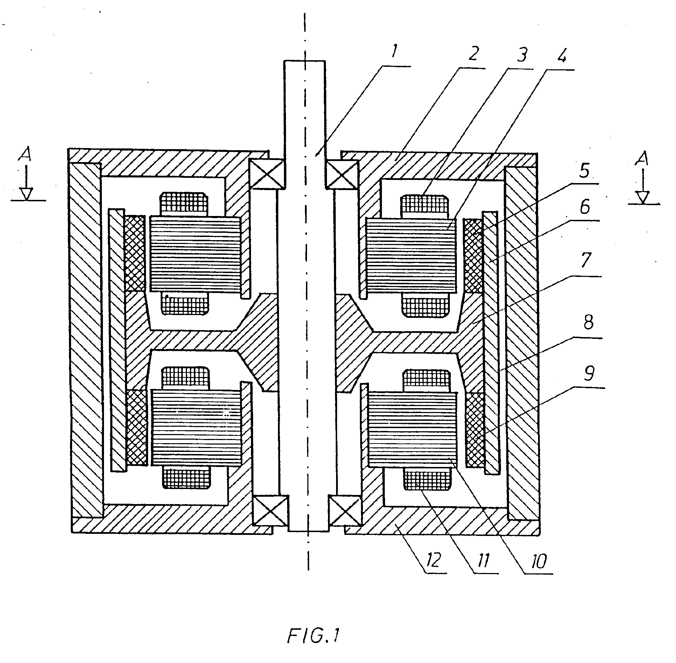

Die Fig. 1 stellt den erfindungsmässigen elektronisch kommutierten Zweiphasen - Elektromotor mit Aussenläufer im Längsquerschnitt dar.

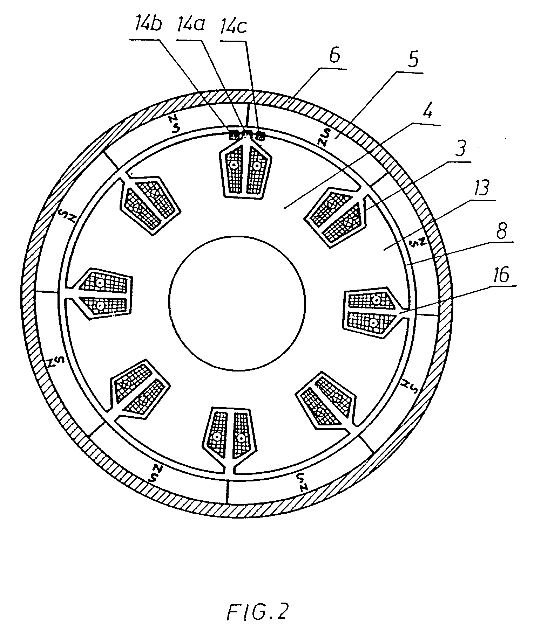

Auf der Läuferachse 1 ist unbewegbar ein Ring 7 angeordnet, an den unbewegbar ein aus magnetisch leitendem Eisen bestehendes Rohr 6 befestigt ist. Innerhalb des Rohres 6 sind auf dessen beiden Seiten je ein Magnetring 5,9 angeordnet. Diese Ringe 5,9 können entweder als achtpolige Magnetringe oder aber aus acht Magnetsegmenten bestehende Ringe ausgeführt sein. Jedes benachbarte Segment besitzt eine entgegengesetzte Polarität. Die Magnetsegmente der Ringe 5,9 können aus Ferritmagneten oder Magneten aus seltenen Erden bestehen. Das Magnetfeld des Läufers besitzt eine trapezoide Verteilung. Ein jeder Magnetring 5,9 umgibt je einen Ständerpaket 4,10, die aus lamellierten Eisen aufgebaut sind. Die Form des Ständerpakets 4, ist auf Fig. 2 dargestellt. Das Ständerpaket 4 besitzt acht Pole 13. Diese Ständerpole 13 sind derart geformt, dass am Umfang der Ständerpole 13 der Spalt zwischen den zwei Ständerpolen 13 klein ist, wonach er sich in Richtung zum Inneren steil derart vergrössert, dass die Breite des Poles 13 und die Breite der Öffnung für die Ständerwicklung 3 ungefähr gleich sind, wogegen der Spalt 8 zwischen den Magnetringen 5,9 und den Ständerpaketen 4,10 konstant ist. In den Ausnehmungen 16 ist die Ständerwicklung 3 angeordnet, deren Wicklungsrichtungen an den einzelnen Feldpolen derart ausgeführt sind, dass bei dem Anschluss an eine Gleichspannungsquelle jeder benachbarte Pol 13 entgegengesetzt polarisiert ist. Die Anzahl der Ständer- und der Läuferpole ist gleich. Im Ausführungsbeispiel handelt es sich um einen Achtpolmotor, die Anzahl der Pole kann jedoch vier, sechs, zehn, zwölf, vierzehn, sechzehn bis hinauf zu sechzig und mehr betragen. Die optimale Polzahl hängt von der Grösse des Motors und der maximalen Drehzahl ab.

Das Ständerpaket 10 istgleich dem Ständerpaket 4. Das Ständerpaket 4 ist unbewegbar am Lagerschild 2 befestigt, wogegen das Ständerpaket 10 unbewegbar am Lagerschild 12 befestigt ist. Das Ständerpaket 10 ist gegenüber dem Ständerpaket 4 um den Winkelα/2, d.h. um die halbe Breite des Poles 13 versetzt.

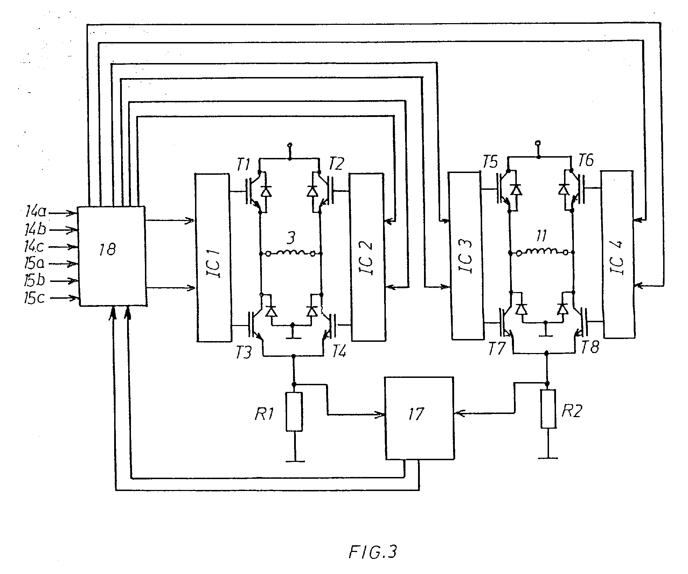

In diesem Fall sind die Magnetringe 5 und 9 fluchtend. Fluchtend können jedoch auch die Ständerpakete 4 und 10 sein und dann ist der Magnetring 5 gegenüber dem Magnetring 9 um den Winkelα/2 versetzt. Die Ständerwicklung 3 ist an die H-Brücke angeschlossen, die die Transistoren T1,T2,T3 und T4 bilden, wogegen die Ständerwicklung 11 an die H-Brücke angeschlossen ist, die die Transistoren T5,T6,T7 und T8 bilden (Fig.3).

Auf Fig. 2 ist die mögliche Positionierung der Hall-Sonden 14a,14b und 14c dargestellt.

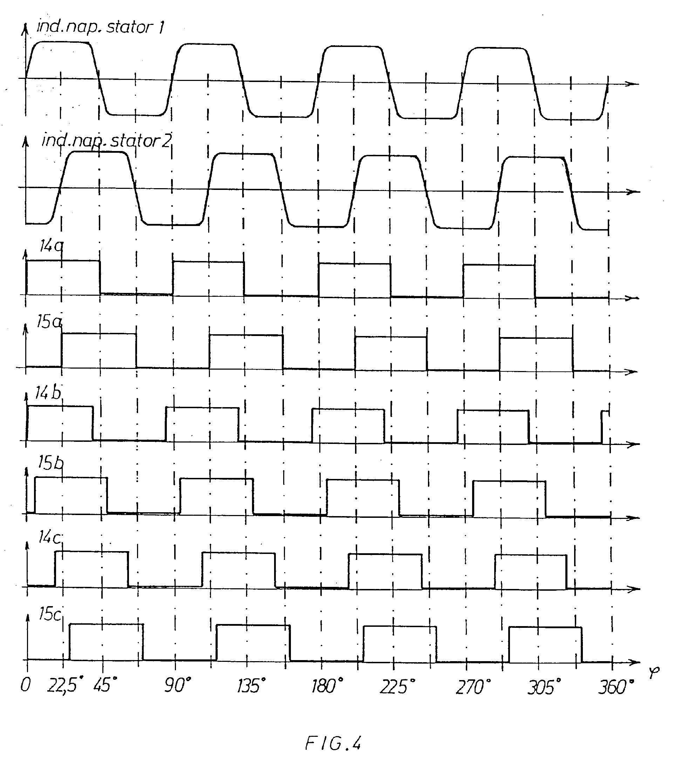

Fig. 4 stellt die Form und den zeitlichen Verlauf der induzierten (Generator) Spannung für eine Drehung des erfindungsgemässen Motors dar, die auf dem Schirm eines Oszilloskops zu sehen ist, wenn der Motor mit einer konstanten Geschwindigkeit gedreht wird. Ausserdem ist auch der zeitliche Verlauf der Ausgangsspannungen der Hall-Sonden 14a,14b,14c und 15a,15b,15c sichtbar, die sich auf Ständer 10 und Ständer 4 befinden.

Die Hall-Sonden 14a,14b und 14c als auch 15a,15b und 15c vermitteln die Lage des Magnetringes 5 des Läufers gegenüber dem Ständerpaket 4 bzw. des Magnetringes 9 des Läufers gegenüber dem Ständerpaket 10. Die Hall-Sonden 14a, 15a vermitteln die Information über die Polarität der induzierten Spannung, die Sonden 14b,15b bestimmen die Punkte der Stromabschaltung bei der Drehung in einer Richtung bei hohen Drehzahlen, die Sonden 14c, 15c die Punkte der Stromabschaltung bei der Drehung in anderer Richtung.

Bei der Berücksichtigung der Signale aller Sonden kann sich der Motor mit konstanten Drehmoment bei niedrigen Drehgeschwindigkeiten sowohl in eine als auch in die andere Richtung drehen.

Fig. 3 zeigt die Blockschaltung der Kommutierungselektronik. Die Kommutierungslogik 18 erhält über die Hall-Sonden 14a,14b und 14c sowie 15a,15b und 15c die Information über die Lage des Läufers gegenüber dem Ständer und bestimmt nach dieser die Stromrichtung in der Ständerwicklung 3 und 11 und zwar über IC1,IC2,IC3 in IC4, die die entsprechenden Transistoren T1 und T4 oder T2 und T3 sowie T5 und T8 oder T6 und T7 öffnen. Der Stromregler 17 misst die Stromstärke an R1 und R2 und als der Strom den eingestellten Wert erreicht, sperrt er über die Kommutierungslogik 18 und IC1 bis IC4 die Transistoren T1,T2 und T5,T6 und begrenzt auf diese Weise den Strom auf den eingestellten Wert.

Der Motor kann auch nur mit den Sonden 14a und 14b arbeiten. Das sichert den vollen Wirkungsgrad des Motors bei niedrigen Drehzahlen und ungefähr den halben Wirkungsgrad des Motors bei hohen (maximalen) Drehzahlen in beiden Richtungen.

Mit der Verwendung von vier Sonden 14a,14b und 15a und 15b wird ein guter Wirkungsgrad des Motors bei niedrigen Drehzahlen in beiden Richtungen und ein maximaler Wirkungsgrad des Motors in einer Drehrichtung bei hohen Drehzahlen und ungefähr ein halber Wirkungsgrad des Motors in der anderen Drehrichtung bei hohen Drehzahlen erreicht.

Bei der Verwendung aller Sonden kann ein guter Wirkungsgrad des Motors bei niedrigen und hohen Drehzahlen in beiden Richtungen erreicht werden.

Der erfindungsmässige elektronisch kommutierte Zweiphasen - Elektromotor löst das gestellte technische Problem zufriedenstellend auf und besitzt vor bekannten derartigen Elektromotoren folgende Vorteile:
- eine höhere spezifische Leistung
- eine einfache Magnetbefestigung
- eine einfache Herstellung bzw. Wicklungsweise des Ständers
- eine einfache Kommutierungselektronik mit besser ausgenutzten Leistungsstufen

## Patentansprüche

1. Elektronisch kommutierter Zweiphasen-Elektromotor mit Außenläufer,
**dadurch gekennzeichnet,**
daß zwei Ständerpakete (4, 10) aus lamelliertem Eisen vorgesehen sind, daß an der Läuferachse unbewegbar ein Ring (7) angeordnet ist, an dem ebenfalls unbewegbar ein Eisenrohr (6) aus magnetisch leitendem Material angeordnet ist, das innerhalb des Rohres (6) auf jeder Ringseite unbeweglich parallele mehrpolige Magnetringe (5, 9) angeordnet sind, welche die mehrpoligen, magnetisch leitenden Ständerpakete mit in Ausnehmungen (16) angeordneten Einphasen-Ständerwicklungen (3, 11) umgeben, wobei die Ständerpakete (4, 10) gegeneinander um die Hälfte der Breite des Poles (13) des Ständerpakets (4, 10) versetzt und unbewegbar an die Lagerschilde (2, 12) befestigt sind, der Spalt (8) zwischen den Magnetringen (5, 9) und den Ständerpaketen (4, 10) konstant ist, und die Breite des Poles (13) und die Breite der Öffnung für die Ständerwicklungen (3, 11) ungefähr gleich ist.

2. Elektronisch kommutierter Zweiphasen - Elektromotor mit Aussenläufer nach Anspruch 1,
**dadurch gekennzeichnet,**
das die Ständerpakete (4,10) parallel und dass die Magnetringe (5,9) untereinander um die Hälfte der Breite des Poles (13) versetzt sind.

## Claims

1. Two-phase DC brushless motor with external rotor,
**characterized in that**
that it has two stator stacks (4, 10) from laminated iron, that the ring (7) is immovably fixed to the shaft of the rotor, that on the ring the iron tube (6) from magnetically conducting material is immovably fixed, that inside the tube (6) on each side of the ring, two parallel, multi-pole magnet rings (5, 9) are immovably fixed, surrounding multi-pole, magnetically conducting stator stacks with in the grooves (16) placed single phase stator windings (3, 11), where the stator stacks (4, 10) are shifted one to antoher by the half width of the pole (13) of stator stacks (4, 10) and immovably fixed to the bearing shields (2, 12), and where the gap (8) between magnet rings (5, 9) and stator stacks (4, 10) is constant, and where the width of the pole (13) and opening width for the stator windings (3, 11) are approximately the same.

2. Two-phase DC brushless motor with external rotor, according to claim 1,
**characterized in that**
that stator stacks (4, 10) are parallel and magnet rings (5, 9) are shifted one to another by half width of the pole (13).

## Revendications

1. Electromoteur à collecteur électronique biphasé avec rotor éxterieur,
**caractérisé**
en ce que deux paquets-stators (4,10) sont en tôle lamellée, en ce que sur l'arbre-moteur est fixé un anneau (7), sur lequel est pareillement fixé un tuyau de fer (6), donc en matière magneto-conducteur, en ce que deux anneaux magnetiques multipolaires (5,9) sont fixés parallèlement sur les deux cotés de l'anneau de fer (6), qui entourrent deux paquetes multipolaires magneto-conducteurs avec deux bobinages monophasés de stator (3, 11) qui se trouvent dans des rainures (16), où les deux paquets-stators (4,10) sont déplacés relativement l'un à l'autre pour la moitié da la largeur de la pièce polaire (13) des paquets-stators (4,10) et fixés sur la plaque protectrice de coussinets (2, 12) et la fente (8) entre les anneaux magnetiques (5,9) et les paquets-stators (4,10) est constante, et la largeur de la pièce polaire (13) et la largeur de l'ouverture pour les bobinages de stator (3,11) sont approximativament égales.

2. Electromoteur à collecteur électronique biphasé avec rotor éxterieur selon la revendication 1,
**caractérisé**
en ce que deux paquets-stators (4,10) sont parallèles et en ce que deux anneaux magnetiques (5,9) sont déplacés relativement l'un à l'aultre pour la moitié de la largeur de la pièce polaire (13).
